# EUROPEAN PATENT APPLICATION

(11) **EP 4 768 847 A1**
(43) Date of publication of application: **01.07.2026**
(21) Application number: 24873028.5
(22) Date of filing: 27.09.2024
(51) Int. Cl.: G01B 11/06, G01B 11/24, G01N 21/25

(54) **THIN FILM MEASURING DEVICE**

(30) Priority: 27.09.2023 KR 20230131183
(71) Applicant: LG Electronics Inc., Seoul 07336 (KR)
(72) Inventor: PARK, Jun, Seoul 06772 (KR); KIM, Kunsoo, Seoul 06772 (KR); YUN, Hansik, Seoul 06772 (KR)
(74) Representative: Schott, Jakob Valentin
(86) International application number: PCT/KR2024/014704
(87) International publication number: WO 2025/071320

(57) **Abstract**

A thin film measuring device is disclosed. The present invention is advantageous in that the thin film measuring device reduces the number of components compared to an existing device, thereby reducing manufacturing costs, simplifying manufacturing, and reducing manufacturing time and measuring time. According to an embodiment of the present invention, the thin film measuring device measures a thickness or a shape of an insulating film with respect to a region of the insulating film corresponding to a region of light reaching the insulating film by using a spectral plane generated by a spectroscopic module.

## Description

### Technical Field

The disclosure relates to a thin film measuring device for measuring the thickness and shape of a thin film.

### Background Art

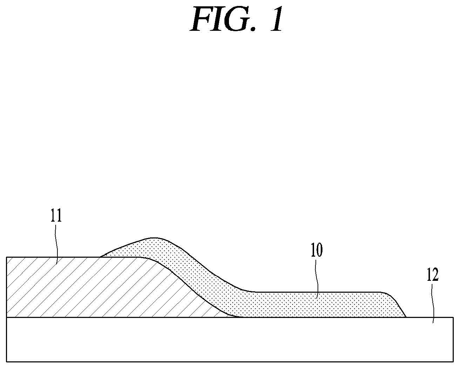

Referring to FIG. 1, a cathode material (cathode active material) 11 is arranged on an aluminum foil 12, and an insulating film 10 is applied (arranged) in a preset area along the edge of the cathode material 11. Although not shown in FIG. 1, a separator is arranged on the cathode material 11, and an anode material is arranged on the separator.

The insulating film 10 is continuously arranged (applied) on a certain portion of the cathode material 11 adjacent to the edge of the cathode material 11 and on a certain portion of the aluminum foil 12 adjacent to the edge of the cathode material 11.

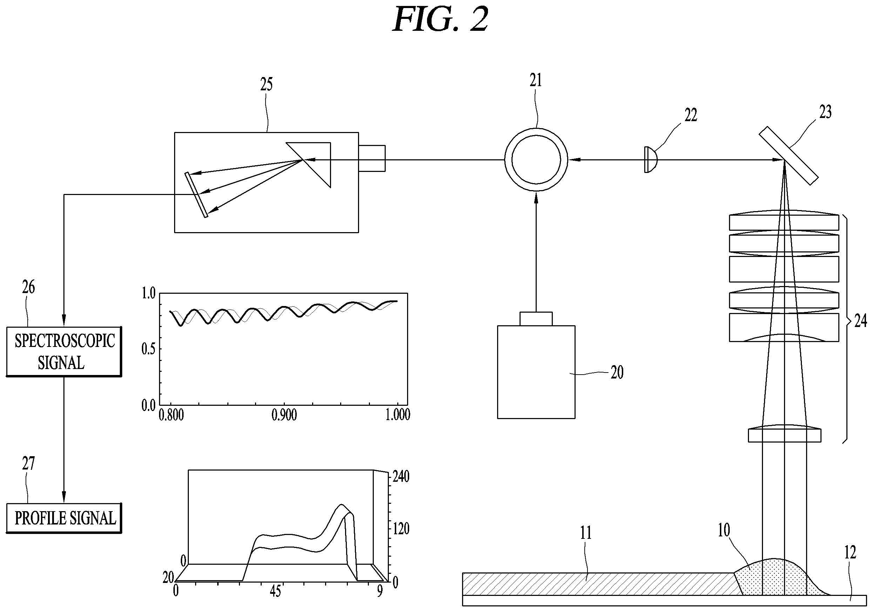

FIG. 2 is a view of a device of measuring the thickness of the insulating film 10. The related art thin film measuring device using a scan mirror 23 requires a driving unit that tilts the scan mirror 23 to a preset angle. A tilting speed of the scan mirror 23 causes limitations in specifications for inspecting the thickness of the insulating film 10, a tilting delay of the scan mirror 23 causes inspection errors during a process of measuring a plurality of spots of the insulating film 10, and a separate configuration to suppress noise and vibration is required.

PCT Patent Application Publication No. 2019-238715 (December 19, 2019) discloses a device using a scan mirror.

### Disclosure of Invention

### Technical Problem

To overcome those problems or other drawbacks of the related art thin film measuring device, an aspect of the disclosure is to provide a thin film measuring device that measures the thickness and/or shape of a thin film (insulating film) without requiring a scan mirror and a driving unit for tilting the scan mirror.

### Solution to problem

The above-described aspect of the disclosure is achieved by the following.

A thin film measuring device according to an embodiment of the disclosure includes a light source unit, a splitter, a spectrometer module, and a sensor unit. The splitter directs light emitted from the light source unit toward an insulating film. Light reflected from the insulating film reaches the spectrometer module. A spectrum of light which has passed through the spectrometer module reaches the sensor unit. The spectrometer module forms a spectral plane of a preset size. The thin film measuring device measures a thickness or shape of the insulating film for an area of the insulating film, the area corresponding to an area of light reaching the insulating film, using the spectral plane.

Specifically, the light emitted from the light source unit is one of infrared light, visible light, and ultraviolet light.

Specifically, a first lens is arranged between the light source unit and the splitter, and the first lens collimates introduced light.

Specifically, the spectrometer module includes a plurality of spectroscopic holes and a plurality of spectrometers, and the spectrometer is arranged in the corresponding spectroscopic hole.

Specifically, the plurality of spectrometers includes a first plurality of spectrometers and a second plurality of spectrometers. The first plurality of spectrometers are arranged spaced apart at preset distances in one direction. The second plurality of spectrometers are arranged below the first plurality of spectrometers, and spaced apart at preset distances in the one direction.

Specifically, second spectrometers included in the second plurality of spectrometers are arranged below first spectrometers included in the first plurality of spectrometers. The second spectrometers are arranged spaced apart at preset distances in a horizontal direction from a position vertically below the first spectrometers.

Specifically, the spectrometer includes an aperture member, a second lens, and a diffraction grating. Light reflected from the insulating film reaches the aperture member. Light which has passed through the aperture member reaches the second lens. Light which has passed through the second lens reaches the diffraction grating.

Specifically, a hole through which light passes is formed in the aperture member.

Specifically, the second lens collimates the light reaching the second lens.

Specifically, a spectrum of light which has passed through a single diffraction grating is arranged on one surface of the sensor unit in a vertical direction.

Specifically, the spectral plane is formed by convergence of spectra of light that have passed through the respective diffraction gratings of the plurality of spectrometers. The spectral plane has a preset length in a horizontal direction and a preset length in the vertical direction.

Specifically, the spectral plane reaches the one surface of the sensor unit.

Specifically, the sensor unit analyzes the spectral plane and generates a spectroscopic signal corresponding to each spectrum constituting the spectral plane.

Specifically, the diffraction grating includes a first diffraction grating and a second diffraction grating. The first diffraction grating and the second diffraction grating are arranged adjacently and spaced apart at a preset distance.

Specifically, the first diffraction grating and the second diffraction grating are prism-type diffraction gratings. Central axis lines of the second lens, the first diffraction grating, and the second diffraction grating are arranged parallel to each other in one direction with being spaced apart from each other.

Specifically, the sensor unit is one of an infrared spectroscopic sensor, a visible light spectroscopic sensor, or an ultraviolet spectroscopic sensor.

### Advantageous Effects of Invention

A thin film measuring device according to the disclosure has the effect of being capable of simultaneously measuring the thickness and/or shape of an area of a preset size on a thin film (insulating film), by using a spectrometer module including a plurality of spectrometers, without requiring a scan mirror and a driving unit for rotating the scan mirror, which are included in the related art thin film measuring device.

The thin film measuring device according to the disclosure has the advantages of reduced manufacturing costs, simple manufacturing, and short manufacturing time by virtue of the small number of components, compared to the related art thin film measuring device.

The thin film measuring device according to the disclosure has the effect of being capable of simultaneously measuring an area of a preset size on a thin film (insulating film) by using a spectrometer module.

The thin film measuring device according to the disclosure forms a spectral plane for a specific spot on an insulating film and analyzes the spectral plane, thereby having the effect of reducing measurement time and analysis time.

The thin film measuring device according to the disclosure is not limited to an industrial field of manufacturing batteries, but is applicable to all industrial fields that measure the thickness and/or shape of thin films.

More detailed effects of the thin film measuring device according to the disclosure are described in the embodiments for carrying out the invention below.

### Brief Description of Drawings

FIG. 1 is a brief view of an arrangement position of an insulating film.
FIG. 2 is a brief view of the related art thin film measuring device.
FIG. 3 is a view of a trajectory along which the device of FIG. 2 scans specific spots of the insulating film.
FIG. 4 is a brief view of a thin film measuring device according to the disclosure.
FIG. 5 is a schematic view of a spectrometer module shown in FIG. 4.
FIG. 6 is a spectrometer of FIG. 5.
FIGS. 7 to 9 are views of different embodiments of a spectrometer arranged in a spectroscopic hole.

### Mode for the Invention

Hereinafter, embodiments according to the disclosure will be described in detail with reference to the accompanying drawings. Detailed descriptions of components among components of the disclosure that can be clearly understood and easily reproduced by those skilled in the art based on the related art will be omitted so as not to obscure the gist of the disclosure.

The accompanying drawings are merely used to help easily understand the technical idea of the disclosure and it should be understood that the idea of the disclosure is not limited by the accompanying drawings.

The singular form is intended to include the plural form as well, unless the context clearly indicates otherwise.

It will be understood that although the terms first, second, etc. may be used herein to describe various elements, these elements should not be limited by these terms. These terms are generally only used to distinguish one element from another. For example, without departing from the scope of the disclosure, a first component may be referred to as a second component, and similarly, the second component may also be referred to as the first component.

Hereinafter, a thin film measuring device according to embodiments of the disclosure will be described.

A thin film measuring device according to the disclosure specifically refers to a device for measuring the thickness and/or shape of an insulating film 10 arranged (applied) on a battery.

FIG. 1 is a brief view of an arrangement position of an insulating film 10.

Referring to FIG. 1, a cathode material (cathode active material) 11 is arranged on an aluminum foil 12, and an insulating film 10 is applied (arranged) in a preset area along the edge of the cathode material 11. The cathode material 11 may include a conductive material (not shown) and a binder (not shown). The conductive material serves to increase the ion conductivity of the cathode material 11, and the binder serves to ensure that the cathode material 11 and the conductive material adhere well to each other.

Although not shown in FIG. 1, a separator is arranged on the cathode material 11, and an anode material is arranged on the separator. The arrangement structure falls under the known technology, so a detailed explanation is omitted.

As shown in FIG. 1, the insulating film 10 is continuously arranged (applied) on a certain portion of the cathode material 11 adjacent to the edge of the cathode material 11 and on a certain portion of the aluminum foil 12 adjacent to the edge of the cathode material 11.

The thin film measuring device according to the disclosure is a device for measuring the thickness and/or shape of the insulating film 10 arranged (applied) on a certain portion of the cathode material 11 and a certain portion of the aluminum foil 12, which are adjacent to an edge of the cathode material 11.

However, the thin film measuring device according to the disclosure is not limited to the industrial field of manufacturing batteries, but is applicable to all industrial fields that measure the thickness and/or shape of thin films.

Accordingly, the embodiments described in this specification and drawings are illustrative to explain the thin film measuring device according to the disclosure.

In this specification, an object that the insulating film 10 and the cathode material 11 are arranged on the aluminum foil 12 shown in FIG. 1 may be named a 'target object.'

FIG. 2 is a brief view of the related art thin film measuring device.

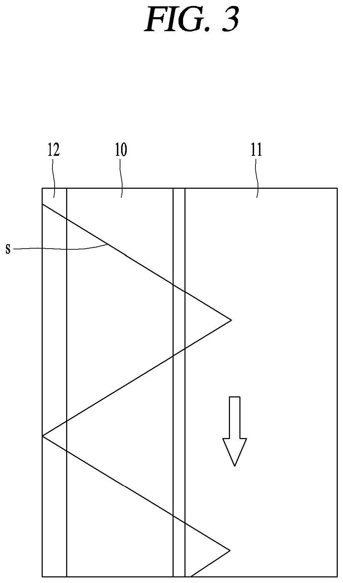

FIG. 3 shows that the device of FIG. 2 scans preset spots of the insulating film 10 to measure the thickness of the insulating film 10. In FIG. 3, a trajectory S represents specific spots on the insulating film 10 where light (e.g., infrared ray) reaches.

In the battery manufacturing field, the related art thin film measuring device uses a scan mirror 23.

Light emitted from the light source unit 20 passes through the scan mirror 23 and a plurality of lenses 24 to reach the insulating film 10 and is reflected. The reflected light sequentially passes through the plurality of lenses 24, the scan mirror 23, an optical fiber coupler 21, and a spectroscopic sensor 25. The light which has passed through the spectroscopic sensor 25 appears as a spectroscopic signal 26 and a profile signal 27.

A user sees the thickness and/or shape of the insulating film 10 through the profile signal 27.

In FIG. 2, the plurality of lenses 24 refer to, for example, F-θ lenses 24, and a lens 22 arranged between the optical fiber coupler 21 and the scan mirror 23 refers to, for example, a collimating lens 22.

The collimating lens 22 refers to a typical curved optical lens which makes introduced light collimated. When the collimating lens 22 is used, the user may control field of view (FOV) setting, collection efficiency, and spatial resolution.

Infrared (IR) light may be used as light emitted from the light source unit 20. Accordingly, specifically, the collimating lens 22 refers to an infrared collimating lens 22, the optical fiber coupler 21 refers to an infrared optical fiber coupler 21, and the spectroscopic sensor 25 refers to an infrared spectroscopic sensor 25.

The related art thin film measuring device using a scan mirror 23 requires a driving unit that tilts the scan mirror 23 to a preset angle. A tilting speed of the scan mirror 23 causes limitations in specifications for inspecting the thickness of the insulating film 10, a tilting delay of the scan mirror 23 causes inspection errors during a process of measuring a plurality of spots of the insulating film 10, and a separate configuration to suppress noise and vibration is required.

To solve the aforementioned problems, the thin film measuring device according to the disclosure does not require the scan mirror 23, the driving unit that rotates the scan mirror 23, and the optical fiber coupler 21.

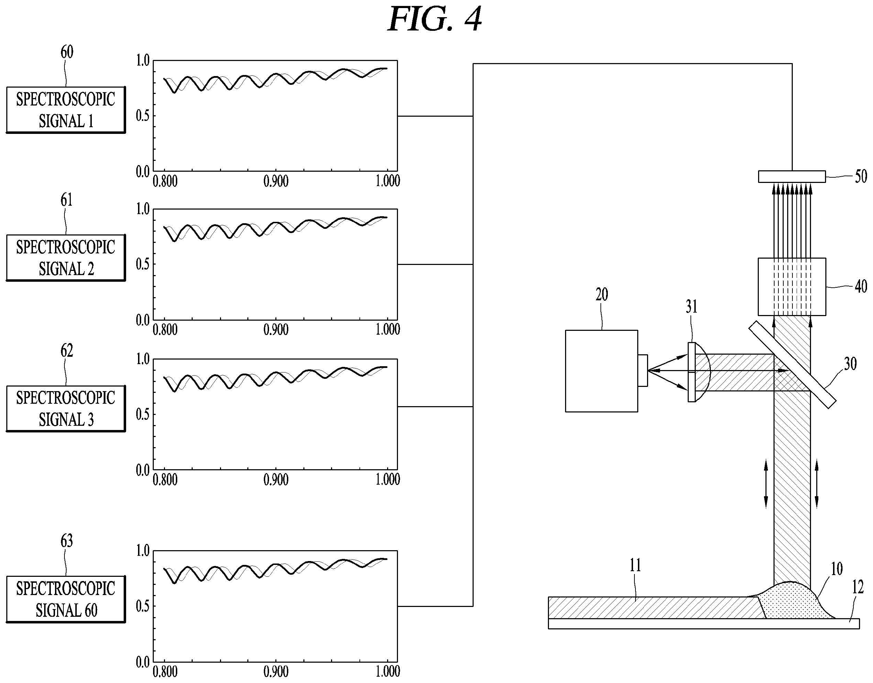

FIG. 4 is a brief view of a thin film measuring device according to the disclosure.

Referring to FIG. 4, the thin film measuring device according to the disclosure includes a light source unit 20, a splitter 30, a lens 31 (located between the light source unit 20 and the splitter 30), a spectrometer module 40, and a sensor unit 50.

The light source unit 20 is a light-emitting device which includes a light source. The light source represents a component that emits light.

The light source unit 20 may be the related art light source unit 20 as shown in FIG. 2.

The light source unit 20 may be a diode light source.

Specifically, the light source unit 20 may be a super-luminescent diode (SLD) light source. The light source unit 20 may emit light which provides output power corresponding to a laser diode and a wide oscillation spectrum width and low coherence corresponding to a light emitting diode (LED).

Light emitted from the light source unit 20 may be infrared (IR) light.

However, depending on an embodiment, light emitted from the light source unit 20 is not limited to infrared light, and may be visible light or ultraviolet light.

In other words, light emitted from the light source unit 20 may be any one of infrared light, visible light, and ultraviolet light. Any one of the infrared light, visible light, and ultraviolet light emitted from the light source unit 20 may be used in the thin film measuring device according to the disclosure.

The light emitted from the light source unit 20 is directed toward the splitter 30.

The splitter 30 splits the light emitted from the light source unit 20 and directs the split light toward the insulating film 10. For example, 50% of light emitted from the light source unit 20 passes through the splitter 30, and the remaining 50% of the light goes toward the insulating film 10.

Light reaching the splitter 30 is directed toward the insulating film 10 arranged on one side (e.g., bottom).

Light passing through the splitter 30 reaches a preset portion (area), rather than a specific point, on the insulating film 10.

Light passing through the splitter 30 reaches the insulating film 10 and is reflected, and the reflected light reaches the spectrometer module 40 through the splitter 30. For example, 50% of the reflected light passes through the splitter 30 and reaches the spectrometer module 40, and the remaining 50% of the reflected light goes toward the light source unit 20. Accordingly, 25% of the light emitted from the light source unit 20 reaches the spectrometer module 40.

By using the splitter 30, it is not necessary to arrange a large number of lenses and/or mirrors between the light source unit 20, the insulating film 10, and the spectrometer module 40.

The lens (first lens) 31 is arranged between the light source unit 20 and the splitter 30.

The first lens 31 collimates introduced light.

More precisely, the first lens 31 allows light emitted from the light source unit 20 to reach the splitter 30 while maintaining a constant area. Here, the phrase 'maintaining a constant area' means that light travels in parallel so that an area illuminated by the light remains constant as the light propagates, rather than increasing.

The first lens 31 is not limited to a specific lens. When a lens allows light emitted from the light source unit 20 to reach the splitter 30 while maintaining a constant area, the lens may be applicable as the first lens 31 according to the disclosure.

Although not shown, the first lens 31 may be arranged as a plurality of lenses depending on an embodiment. That is, the first lens 31 may be a first lens assembly including a plurality of lenses.

The plurality of lenses of the first lens assembly are spaced apart at a preset distance. At this time, central axis lines of the plurality of lenses coincide with each other. That is, the plurality of lenses are arranged on the same central axis line at a preset distance apart. The central axis line of the lens refers to an axis line passing through the center of the lens.

In another example, the central axis lines of some of the plurality of lenses constituting the first lens assembly may be spaced apart from the central axis of the other lens by a preset distance.

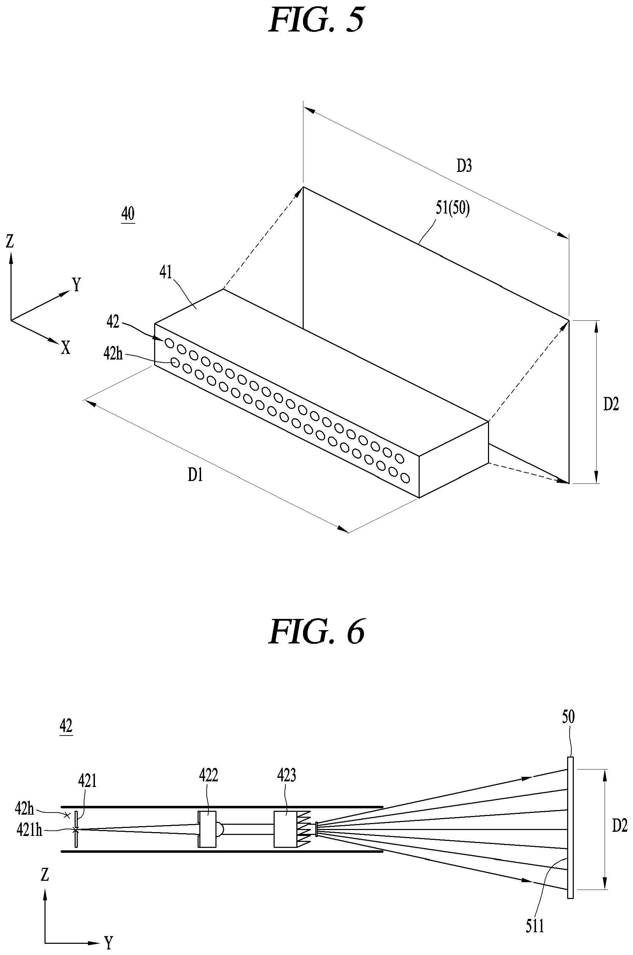

FIG. 5 is a schematic view of the spectrometer module 40 shown in FIG. 4, and FIG. 6 is a view of a spectrometer 42 of FIG. 5.

Referring to FIGS. 4 to 6, the spectrometer module 40 includes a plurality of spectroscopic holes 42h and spectrometers 42 arranged in the plurality of spectroscopic holes 42h, respectively. Hereinafter, the spectrometer 42 will be described first.

The spectrometer module 40 includes a plurality of spectrometers 42.

The spectrometer 42 spectroscopically analyzes light reflected from the insulating film 10. More precisely, the spectrometer 42 is a device that separates light according to wavelengths to form a spectrum.

Light passing through the spectrometer 42 reaches the sensor unit 50 in the form of the spectrum.

The spectrometer module 40 includes the plurality of spectrometers 42, and thus arranges a plurality of spectra.

The spectrometer module 40 forms a spectral plane 51 of a preset size.

Specifically, light passing through the spectrometer module 40 is arranged into a plurality of spectra, and the plurality of spectra form the spectral plane 51 of the preset size formed in horizontal and vertical directions.

In the spectrometer module 40, the plurality of spectrometers 42 may be arranged in a structure identical to or similar to a matrix structure.

Specifically, the plurality of spectrometers 42 may be arranged spaced apart at preset distances in one direction (X direction, horizontal direction in FIG. 5), and another plurality of spectrometers 42 may be arranged in the one direction below the plurality of spectrometers 42 arranged in the one direction. Still another plurality of spectrometers 42 may be arranged in the one direction below the another plurality of spectrometers 42 arranged in the one direction. The arrangement of the plurality of spectrometers 42 may be further added depending on the measurement area of the insulating film 10.

For example, the plurality of spectrometers 42 include a first row of spectrometers 42 and a second row of spectrometers 42.

The first row of spectrometers 42 indicates the plurality of spectrometers 42 spaced apart at preset distances in one direction (X direction, horizontal direction in FIG. 5).

The second row of spectrometers 42 indicates a plurality of spectrometers 42 arranged below the first row of spectrometers 42 and spaced apart at preset distances in the one direction (X direction, horizontal direction in FIG. 5).

Second spectrometers 42 included in the second row of spectrometers 42 are positioned below first spectrometers 42 included in the first row of spectrometers 42. At this time, the second spectrometers 42 may be arranged below the first spectrometers 42 in a vertical direction, or may be arranged spaced apart at preset distances in the horizontal direction at a position vertically below the first spectrometers 42 in an offset manner from the first spectrometers 42.

For example, 30 spectrometers 42 may be arranged horizontally, and another 30 spectrometers 42 may be arranged below the 30 spectrometers 42. At this time, the spectrometers 42 arranged below may be arranged vertically parallel to or offset from the spectrometers 42 arranged above.

To uniformly form the spectral plane 51, the first row of spectrometers 42 and the second row of spectrometers 42 need to be arranged offset from each other in the vertical direction (downward) (see FIG. 5).

The spectrometer module 40 shown in FIG. 5 shows a case where 30 spectrometers 42 are arranged horizontally and 2 spectrometers 42 are arranged vertically (30 x 2 channels), and a length D1 of the spectrometer module 40 in one direction (X direction, horizontal direction in FIG. 5) is 6 mm.

Although the spectrometers 42 in FIG. 5 are shown forming the 30 x 2 channels, the spectrometers 42 are not limited to the 30 x 2 channels and may form various channels depending on the measurement area of the insulating film 10.

In FIG. 5, reference numeral 41 denotes a spectrometer body 41.

The spectrometer body 41 is a body that constitutes the spectrometer module 40.

In FIG. 5, the spectrometer body 41 is formed in a rectangular parallelepiped shape, but the outer shape of the spectrometer body 41 may be formed in various shapes.

FIG. 6 is a cross-sectional view of one of the plurality of spectrometers 42.

The spectrometer module 40 includes a plurality of spectroscopic holes 42h.

The spectrometer 42 is arranged (formed) in the spectroscopic hole 42h formed in the spectrometer body 41. The number of spectroscopic holes 42h and the number of spectrometers 42 are equal to each other.

The spectroscopic hole 42h is a hole which is formed through the spectrometer body 41.

Specifically, the spectroscopic hole 42h is a hole which penetrates the spectrometer body 41 in a direction (Y direction, front-rear direction in FIG. 5) horizontally orthogonal to the one direction.

One side of the spectroscopic hole 42h faces the insulating film 10, and the other side faces the sensor unit 50.

The spectrometer 42 includes an aperture member 421, a lens (second lens) 422, and a diffraction grating 423.

The aperture member 421, the second lens 422, and the diffraction grating 423 are arranged sequentially from one side to the other side of the spectroscopic hole 42h.

Light reflected from the insulating film 10 reaches the aperture member 421.

The aperture member 421 is a member with a small hole (referred to as an 'aperture 421h') formed in the middle thereof.

The aperture 421h is a hole formed through the aperture member 421 and may be formed in the middle of the aperture member 421.

A wavelength of light passing through the aperture 421h may be, for example, 1,550 nm ± 25 nm. A cross-sectional diameter of the spectroscopic hole 42h may be, for example, 0.2 mm or less, and a diameter of the aperture 421h may be, for example, 0.1 mm or less. The numerical values are suitable for indicating the thickness and/or shape of the insulating film 10.

Light reflected from one point of the insulating film 10 passes through the splitter 30 and then reaches the spectrometer module 40. The light that has reached the spectrometer module 40 is introduced into one of the plurality of spectroscopic holes 42h. A portion of the light introduced into the one spectroscopic hole 42h passes through the aperture 421h and then heads toward the second lens 422.

Light reflected from each point of the insulating film 10 passes through the splitter 30 and is then introduced into each of the plurality of spectroscopic holes 42h formed in the spectrometer module 40. The light which has been introduced into each spectroscopic hole 42h forms a spectrum, and such spectra are converged to form a spectral plane 51.

The light which has passed through the aperture 421h of the aperture member 421 reaches the second lens 422.

The second lens 422 collimates introduced light.

More precisely, the second lens 422 causes the light reaching the second lens 422 to reach the diffraction grating 423 while maintaining a constant area. Here, the phrase 'maintaining a constant area' means that light travels in parallel so that an area illuminated by the light remains constant as the light propagates, rather than increasing.

The second lens 422 is not limited to a specific lens. When a lens allows light passing through the second lens 422 to reach the diffraction grating 423 while maintaining a constant area, the lens may be applicable as the second lens 422 according to the disclosure.

Although not shown, the second lens 422 may be arranged as a plurality of lenses depending on an embodiment. That is, the second lens 422 may be a second lens assembly including a plurality of lenses.

The plurality of lenses of the second lens assembly are spaced apart at a preset distance. At this time, central axis lines of the plurality of lenses coincide with each other. That is, the plurality of lenses are arranged on the same central axis line at a preset distance apart. The central axis line of the lens refers to an axis line passing through the center of the lens.

In another example, the central axis of some of the plurality of lenses constituting the second lens assembly may be spaced apart from the central axis line of the other lens by a preset distance.

Light passing through the second lens 422 reaches the diffraction grating 423.

The diffraction grating 423 is a device that separates a spectrum of light according to wavelengths by using diffraction of light.

A plurality of slits are formed at certain intervals on one surface of the diffraction grating 423.

Light passing through the diffraction grating 423 is separated by wavelength by the slits formed on the one surface to form a spectrum.

The diffraction grating 423 separates light by wavelength like a prism. The principle by which the diffraction grating 423 creates a spectrum is a known technology, so a detailed explanation is omitted.

The light (spectrum) that has passed through the diffraction grating 423 reaches one surface of the sensor unit 50.

The spectrum of the light which has passed through a single diffraction grating 423 is arranged in a direction (Z direction, vertical direction) perpendicular to the one direction as shown in FIG. 6.

The spectrum of the light which has passed through the diffraction grating 423 appears on the one surface of the sensor unit 50. More precisely, the spectrum of the light which has passed through the diffraction grating 423 reaches the one surface of the sensor unit 50, and the spectrum appears on the one surface of the sensor unit 50. In FIG. 6, reference numeral 511 denotes a vertical area, in which the spectrum of light appears, on the one surface of the sensor unit 50.

In some embodiments, in the spectrometer module 40, the plurality of spectrometers 42 are arranged in a matrix structure or a similar structure in one direction (X direction, horizontal direction in FIG. 5) and in a direction perpendicular to the one direction (Z direction, vertical direction in FIG. 5), and are spaced apart at preset distances.

Accordingly, as shown in FIG. 5, when the spectra of light passing through the corresponding diffraction gratings 423 of the plurality of spectrometers 42 are converged, a spectral plane 51 is formed with a preset size having a preset length D3 in the horizontal direction and a preset length D2 in the vertical direction. In FIG. 5, reference numeral 51 denotes an area of a preset size, in which the spectral plane 51 appears, on the one surface of the sensor unit 50.

The spectral plane 51, which appears on (reaches) the one surface of the sensor unit 50 through the spectral module 40 according to the disclosure has a size that, for example, the length D3 in the horizontal direction is 6.4 mm (320 pixels) and the length D2 in the vertical direction is 5.12 mm (256 pixels). At this time, the length D1 of the spectrometer body 41 in one direction (X direction, horizontal direction in FIG. 5) is, for example, 6 mm.

Resolution of the spectral plane 51 appearing on the one surface of the sensor unit 50 is, for example, 320 pixels × 256 pixels. At this time, a pixel pitch is 20 µm.

The thickness and/or shape of the insulating film 10 for an area of the insulating film 10, which corresponds to an area of light reaching the insulating film 10 by the splitter 30, may be determined using the spectral plane 51 formed by the spectrometer module 40.

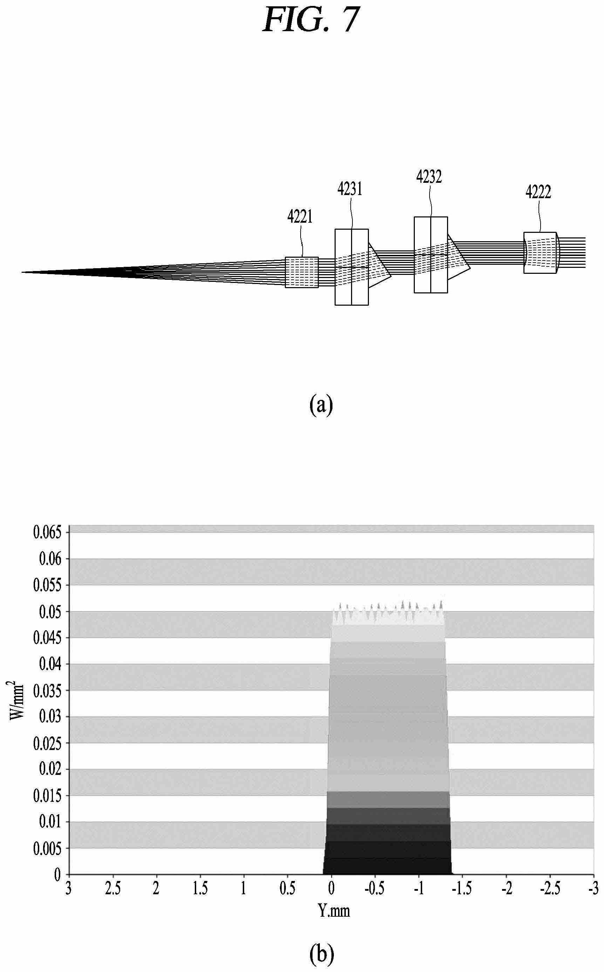

FIGS. 7 to 9 are views of different embodiments of the spectrometer 42 arranged in the spectroscopic hole 42h.

Referring to embodiments shown in FIGS. 7 to 9, (a) of each of FIGS. 7, 8, and 9 shows the spectrometer 42, and (b) shows a spectrum. In the drawings (b), a horizontal axis represents the spectroscopic characteristics according to the wavelength separation effect of the diffraction grating 423 as the size of light reaching the one surface of the sensor unit 50 (image sensor), and a vertical axis represents intensity.

The spectrometer 42 includes an aperture member 421 (not shown in FIGS. 7 to 9), a lens (third lens) 4221, a first prism-type diffraction grating 4231, a second prism-type diffraction grating 4232, and a lens (fourth lens) 4222.

The aperture member 421, the third lens 4221, the first prism-type diffraction grating 4231, the second prism-type diffraction grating 4232, and the fourth lens 4222 are arranged sequentially from one side to the other side of the spectroscopic hole 42h.

The third lens 4221 performs the role of the second lens 422 described above. That is, the third lens 4221 causes light reaching the third lens 4221 to reach the first prism-type diffraction grating 4231 while maintaining a constant area.

The first prism-type diffraction grating 4231 and the second prism-type diffraction grating 4232 may be the same diffraction grating 423.

The basic shape and basic principle of the first prism-type diffraction grating 4231 and the second prism-type diffraction grating 4232 are known, so a detailed description thereof is omitted.

A prism angle of the first prism-type diffraction grating 4231 and/or the second prism-type diffraction grating 4232 shown in FIG. 7 is 34° and a groove density is 200 l/mm.

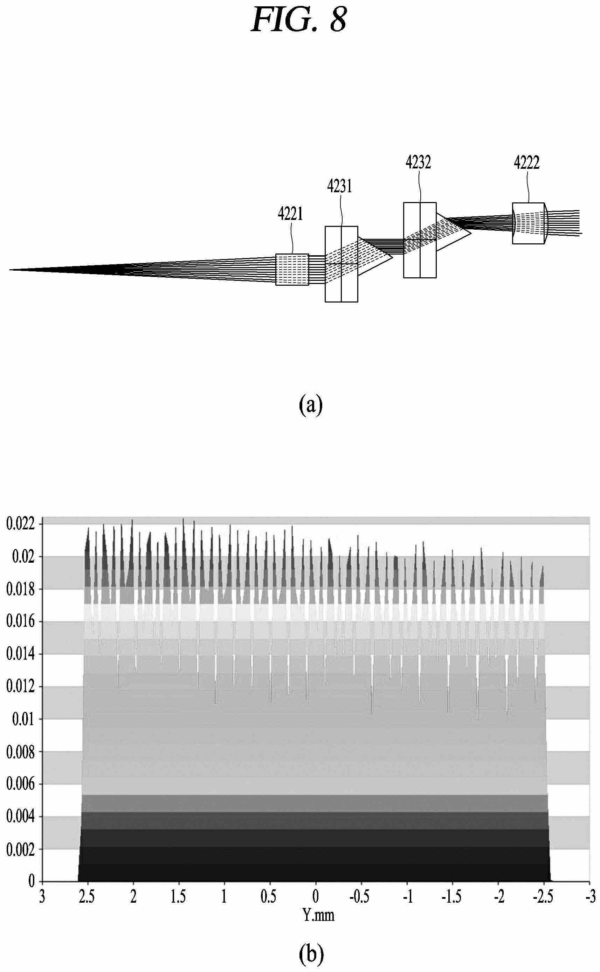

A prism angle of the first prism-type diffraction grating 4231 and/or the second prism-type diffraction grating 4232 shown in FIG. 8 is 60°, and a groove density is 400 l/mm.

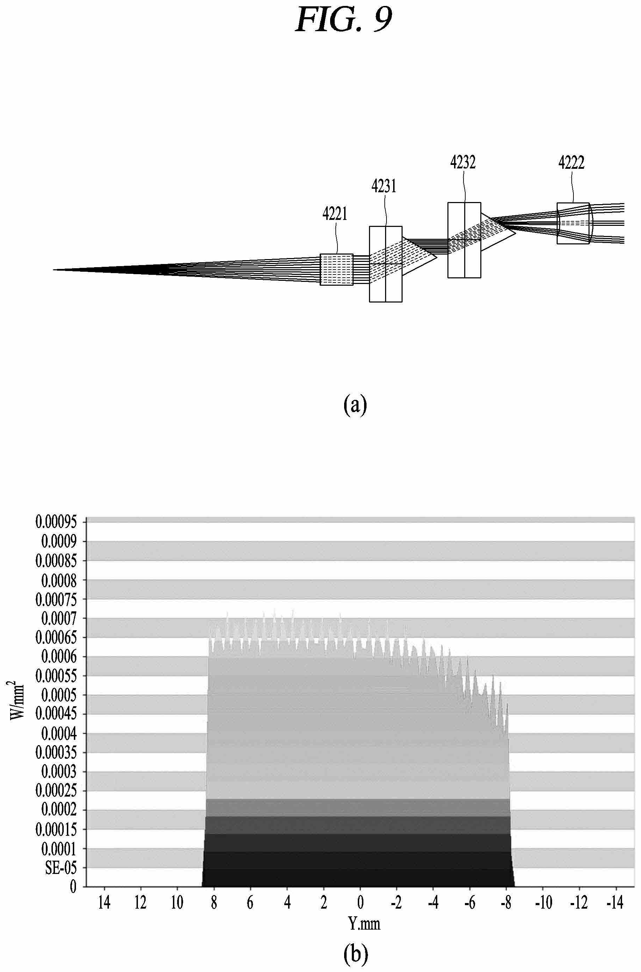

A prism angle of the first prism-type diffraction grating 4231 and/or the second prism-type diffraction grating 4232 shown in FIG. 9 is 69°, and a groove density is 500 l/mm.

The fourth lens 4222 is a lens which magnifies or reduces light (spectrum) that has passed through the second prism-type diffraction grating 4232, or causes the spectrum to reach a desired location.

The fourth lens 4222 may be selected from various types of lenses that exhibit a spectrum of a preset size, or may be selected from various types of lenses according to the user's needs.

The fourth lens 4222 may be, for example, an imaging lens or delivery optics.

Depending on an embodiment, the fourth lens 4222 may not be arranged.

As shown in FIGS. 7 to 9, to expand a measurement area of the insulating film 10 and/or expand a spectroscopic area, the central axis lines of the third lens 4221, the first prism-type diffraction grating 4231, the second prism-type diffraction grating 4232, and/or the fourth lens 4222 may not be arranged on the same central axis line and may be spaced apart from one another.

Specifically, the central axis lines of the third lens 4221, the first prism-type diffraction grating 4231, the second prism-type diffraction grating 4232, and/or the fourth lens 4222 may be arranged parallel in one direction while being spaced apart from one another.

The sensor unit 50 represents a spectroscopic sensor.

Specifically, when light used in the disclosure is any one of infrared light, visible light, and ultraviolet light, the sensor unit 50 may be any one of an infrared spectroscopic sensor, a visible light spectroscopic sensor, and an ultraviolet spectroscopic sensor. The 'infrared spectroscopic sensor' is also called an 'infrared image sensor'.

The sensor unit 50 detects one of infrared light, visible light, and ultraviolet light, and analyzes a spectrum that reaches one surface of the sensor unit 50, thereby generating a spectral signal corresponding to the spectrum.

As described above, when the spectra of light that have passed through the diffraction gratings 423 of the plurality of spectrometers 42 are converged, the spectral plane 51 of the preset size is formed.

Through the spectrometer module 40 according to the disclosure, the spectral plane 51 appears on (reaches) the one surface of the sensor unit 50.

The sensor unit 50 analyzes the spectral plane 51 that has reached the one surface of the sensor unit 50 and generates a spectroscopic signal corresponding to each spectrum constituting the spectral plane 51.

Spectroscopic signals 60-63 may be displayed through a measuring device which is electrically connected to the sensor unit 50 as shown in FIG. 4.

The first spectroscopic signal 60, the second spectroscopic signal 61, the third spectroscopic signal 62, and the 60th spectroscopic signal 63 shown in FIG. 4 represent spectroscopic signals in case where the spectrometer module 40 shown in FIG. 5 has 60 spectrometers 42 (30 x 2 channels). In FIG. 4, the 4th to 59th spectroscopic signals were omitted.

The sensor unit 50 may analyze and detect intensity, wavelength, and reflectance of each of the spectroscopic signals 60 to 63. The graphs of the spectroscopic signals 60 to 63 shown in FIG. 4 each represent the reflectance.

Although not shown in FIG. 4, with reference to FIG. 2, when the spectroscopic signals 60 to 63 are analyzed, a profile signal of the insulating film 10 for the area of the insulating film 10 where light has reached may be acquired. The shape and/or thickness of the insulating film 10 may be calculated from the profile signal.

As described above, the thin film measuring device according to the disclosure has the advantage of being capable of simultaneously measuring the thickness and/or shape of the insulating film 10 in an area of a preset size (an area exposed to ultraviolet light) on the insulating film 10 through the spectrometer module 40 including the plurality of spectrometers 42.

The related art thin film measuring device using the scan mirror 23 (see FIGS. 2 and 3) has the disadvantage in that the thin film measuring device cannot simultaneously measure a specific area of the insulating film 10 because the thin film measuring device must use the scan mirror 23 to project light onto a specific spot on the insulating film 10 while the target object is moving and the light must reach the insulating film 10 along a specific trajectory S.

The related art thin film measuring device has the inconvenience of having to match the movement speed of the target object and the rotation speed of the scan mirror 23 to project light onto the specific spot on the insulating film 10.

The thin film measuring device according to the disclosure solves the problems of the related art thin film measuring device using the scan mirror 23.

The thin film measuring device according to the disclosure can simultaneously measure the thickness and/or shape of the insulating film 10 in an area of a preset size (an area to which ultraviolet light is emitted) on the insulating film 10, by using the spectrometer module 40 including the plurality of spectrometers 42 without requiring the scan mirror 23 and the driving unit for tilting the scan mirror 23.

Accordingly, the thin film measuring device according to the disclosure has the advantages of reduced manufacturing costs, simple manufacturing, and short manufacturing time by virtue of the small number of components.

Above all, the thin film measuring device according to the disclosure has the advantage of simultaneously measuring an area of a preset size on the insulating film 10 by using the spectrometer module 40.

This means that the thin film measuring device according to the disclosure can simultaneously measure a plurality of individual measuring spots located in an area of a preset size on the insulating film 10.

As a result, the thin film measuring device according to the disclosure forms the spectral plane 51 for a specific area of the insulating film 10 and analyzes the spectral plane 51, thereby having the effect of reducing measurement time and analysis time. On the spectral plane 51, the vertical direction represents a spectrum 511, and the horizontal direction represents spatial (position) information of the insulating film 10. These are measured at the same time, and thus the spectral plane 51 is like a snapshot of a camera.

The thin film measuring device according to the disclosure is not limited to an industrial field of manufacturing batteries, but is applicable to all industrial fields that measure the thickness and/or shape of thin films.

## Claims

1. A thin film measuring device, comprising:
a light source unit;
a splitter configured to direct light emitted from the light source unit toward an insulating film;
a spectrometer module where light reflected from the insulating film reaches; and
a sensor unit where a spectrum of light, which has passed through the spectrometer module, reaches,
wherein the spectrometer module forms a spectral plane of a preset size, and
the thin film measuring device measures a thickness or shape of the insulating film for an area of the insulating film, the area corresponding to an area of light reaching the insulating film, using the spectral plane.

2. The thin film measuring device of claim 1, wherein the light emitted from the light source unit is one of infrared light, visible light, and ultraviolet light.

3. The thin film measuring device of claim 1, wherein a first lens is arranged between the light source unit and the splitter, and
the first lens collimates introduced light.

4. The thin film measuring device of claim 1, wherein the spectrometer module comprises a plurality of spectroscopic holes and a plurality of spectrometers, and
the spectrometer is arranged in the corresponding spectroscopic hole.

5. The thin film measuring device of claim 4, wherein the plurality of spectrometers comprise
a first plurality of spectrometers arranged spaced apart at preset distances in one direction, and
a second plurality of spectrometers arranged below the first plurality of spectrometers, and spaced apart at preset distances in the one direction.

6. The thin film measuring device of claim 5, wherein second spectrometers included in the second plurality of spectrometers are arranged below first spectrometers included in the first plurality of spectrometers, and
the second spectrometers are arranged spaced apart at preset distances in a horizontal direction from a position vertically below the first spectrometers.

7. The thin film measuring device of claim 4, wherein the spectrometer comprises:
an aperture member where light reflected from the insulating film reaches;
a second lens where light which has passed through the aperture member reaches; and
a diffraction grating where light which has passed through the second lens reaches.

8. The thin film measuring device of claim 7, wherein a hole through which the light passes is formed in the aperture member.

9. The thin film measuring device of claim 7, wherein the second lens collimates the light reaching the second lens.

10. The thin film measuring device of claim 7, wherein a spectrum of light, which has passed through a single diffraction grating, is arranged on one surface of the sensor unit in a vertical direction.

11. The thin film measuring device of claim 10, wherein the spectral plane is formed by convergence of spectra of light which have passed through the respective diffraction gratings of the plurality of spectrometers, and
the spectral plane has a preset length in a horizontal direction and a preset length in the vertical direction.

12. The thin film measuring device of claim 11, wherein the spectral plane reaches the one surface of the sensor unit.

13. The thin film measuring device of claim 12, wherein the sensor unit analyzes the spectral plane and generates a spectroscopic signal corresponding to each spectrum constituting the spectral plane.

14. The thin film measuring device of claim 7, wherein the diffraction grating comprises a first diffraction grating and a second diffraction grating, and
the first diffraction grating and the second diffraction grating are arranged adjacently and spaced apart at a preset distance.

15. The thin film measuring device of claim 14, wherein the first diffraction grating and the second diffraction grating are prism-type diffraction gratings, and
central axis lines of the second lens, the first diffraction grating, and the second diffraction grating are arranged parallel to each other in one direction with being spaced apart from each other.

16. The thin film measuring device of claim 1, wherein the sensor unit is one of an infrared spectroscopic sensor, a visible light spectroscopic sensor, and an ultraviolet spectroscopic sensor.
